# EUROPÄISCHE PATENTSCHRIFT

(11) **EP 3 045 143 B1**
(45) Veröffentlichungstag und Bekanntmachung des Hinweises auf die Patenterteilung: **08.05.2019**
(21) Anmeldenummer: 15192730.8
(22) Anmeldetag: 03.11.2015
(51) Int. Cl.: A61C 5/60

(54) **MISCHKAPSEL ZUR HERSTELLUNG EINES DENTALPRÄPARATS**
MIXING CAPSULE FOR PRODUCING A DENTAL PREPARATION
CAPSULE DE MELANGE DESTINEE A LA FABRICATION D'UN MATERIAU DENTAIRE

(30) Priorität: 14.01.2015 DE 102015200424
(43) Veröffentlichungstag der Anmeldung: 20.07.2016
(73) Patentinhaber: VOCO GmbH, 27472 Cuxhaven (DE)
(72) Erfinder: Plaumann, Manfred Thomas, 27472 Cuxhaven (DE); Barg, Andree, 21762 Otterndorf (DE); Leiner, Uwe, 27476 Cuxhaven (DE)
(74) Vertreter: Eisenführ Speiser

(56) Entgegenhaltungen:
- EP-A1- 1 205 196
- EP-A2- 0 503 824
- EP-A2- 2 510 897
- CH-A- 459 056
- DE-A1- 2 324 296
- JP-A- 2012 130 797
- US-A- 4 889 432

## Beschreibung

Die vorliegende Erfindung betrifft eine Mischkapsel zur Herstellung eines Dentalpräparats, wobei das Dentalpräparat aus unterschiedlichen Komponenten in einem Mischraum der Mischkapsel gemischt wird, die in der Mischkapsel bis zur Mischung sicher gelagert sind.

Der Begriff "Dentalpräparat" bezieht sich hierbei auf Mehrkomponentensysteme wie Adhäsive, Füllungsmaterialien, Befestigungsmaterialien im Allgemeinen (insbesondere Befestigungszemente) und Glasionomere, nicht aber auf Amalgane bzw. Amlaganmischungen.

Zunächst zielt die Erfindung auf eine Mischkapsel ab, wobei die Mischkapsel unter Umständen ihrerseits aber wiederum auch zusätzlich zur Eigenschaft "Mischkapsel" auch als Applikationskapsel eingesetzt werden kann.

Mischkapsel, die zudem auch als Applikationskapseln genutzt werden können, sind beispielsweise in EP 0 0503 824 A2, EP 0 783 872 A2, EP 1 029 513 A2, EP 2 238 942 A2 und EP 2 510 897 A2 bekannt.

Diesen Mischkapseln ist gemein, dass sie jeweils für eine Mischung von zwei Komponenten oder Bestandteilen ausgestaltet sind, so dass durch den damit begrenzten Umfang an Kombinationsmöglichkeiten Beschränkungen hinsichtlich der erreichbaren Eigenschaften des gemischten Dentalpräparats bestehen.

Ein Einwegverpackungssystem, mit dem auch drei oder sogar noch mehr Komponenten gemischt werden können, wird in DE 10 2006 015 238 A1 beschrieben. Beim dem dort beschriebenen Einwegverpackungssystem erfolgt die Mischung aber Prinzip-bedingt in der Form, dass zunächst eine erste und zweite Komponente miteinander gemischt werden, wonach erst die Kombination von erster und zweiter Komponente zur dritten Komponente gelangt. Die Mischung aus DE 10 2006 015 238 A1 ist eine kaskadierende, schrittweise Mischung, bei der mehrere Mischungen von jeweils zwei Mischungsbestandteilen (reine Komponente oder schon Gemisch aus Komponenten) miteinander zusammengebracht werden.

Eine derartige serielle Mischung von Komponenten erscheint aber mit den aus in EP 0 783 872 A2, EP 1 029 513 A2, EP 2 238 942 A2 oder EP 2 510 897 A2 bekannte Misch- und Applikationskapseln nicht möglich.

Ein Wunsch, der der vorliegenden Erfindung zu Grunde liegt, besteht darin, eine Mischkapsel bereitzustellen, die weiterhin Vorteile erlaubt, wie sie aus für die aus EP 0 783 872 A2, EP 1 029 513 A2, EP 2 238 942 A2 und EP 2 510 897 A2 bekannten Misch- und Applikationskapseln bekannt und beschrieben sind, wobei aber zudem auch die Beschränkungen hinsichtlich der erreichbaren Dentalpräparate überwunden werden.

Es wird daher eine Mischkapsel zur Herstellung eines Dentalpräparats vorgeschlagen, wie sie in Anspruch 1 definiert ist.

Der Begriff "Fluid" ist hier so zu verstehen, dass hiervon Flüssigkeiten, Gase und auch Pasten umfasst sind.

Eine der Erfindung zu Grunde liegende Erkenntnis besteht darin, dass es ein Aufbau, bei dem die Kolbenkörper, die jeweilige Hohlräume und Kanäle zur Zuführung des jeweiligen Fluids vom Hohlraum zum Mischraum aufweisen, selbst jeweils auch den Mischraum begrenzen, erlaubt, parallel zueinander mehrere diese Kolbenkörper vorzuzusehen, so dass nicht nur ein Fluid sondern mehrere Fluide in dem Mischraum unabhängig voneinander eingebracht werden können.

Weist die Mischkapsel eine Hülse auf, die den Kapselkörper wenigstens teilweise umschließt und die gegenüber dem Kapselkörper in wenigstens einer ersten und einer zweiten Position anzuordnen ist, wobei die Hülse in der ersten Position die Austrittsöffnung verschließt und die Austrittsöffnung in der zweiten Position freigelegt ist, so dass das Dentalpräparat durch die Austrittsöffnung ausgebracht werden kann, wirkt die Hülse hierbei insbesondere als Verschluss für die Austrittsöffnung, wobei die Anordnung, dass die Hülse den Kapselkörper zumindest in einem Bereich davon und/oder zumindest über einen Teil seines Umfangs umschließt, eine einfache Bauweise und damit geringe Kosten ermöglicht, ohne dass die Verschlusseigenschaften dadurch wesentlich beeinträchtigt würden.

In einer Weiterführung der Ausgestaltung weist die Hülse eine Hülsenöffnung auf und durch ein gegenseitiges Verdrehen und/oder Verschieben von Hülse und Kapselkörper können Hülsenöffnung und Austrittsöffnung miteinander in der zweiten Position in Deckung gebracht werden, so dass das Dentalpräparat durch die Austrittsöffnung und die Hülsenöffnung ausgebracht werden kann, und voneinander in der ersten Position getrennt werden können, so dass die Hülse die Austrittsöffnung verschließt.

Vorteilhafterweise weist die Hülse selbst eine Öffnung (etwa in Form eines Lochs, einer Aussparung, eines Schlitzes o.ä.) auf, die auf die Austrittsöffnung des Kapselkörpers insoweit abgestimmt ist, dass mit einer entsprechenden Relativbewegung (z.B. koaxiales Rotieren oder laterale Bewegung entlang einer Längsachse) die beiden Öffnungen zusammengebracht werden können, so dass von außen durch die Hülsenöffnung und die Austrittsöffnung in den Mischraum eingegriffen oder Material auf umgekehrten Weg herausgeführt werden kann.

In einer Variante der Ausgestaltung weist der Kapselkörper in wenigstens einem Abschnitt eine zylinderförmige Außenform auf, wobei sich die Austrittsöffnung in dem Abschnitt befindet, wobei die Hülse den Kapselkörper in wenigstens einem Teil des Abschnitts zumindest teilweise umschließt und zumindest für ein Verdrehen von Hülse und Kapselkörper gegeneinander ausgestaltet ist.

Die Zylinderform erlaubt in einfacher Weise und insbesondere auch bei nicht oder nur sehr wenig verformbaren Materialen eine sichere und dennoch dichte Verdrehung von Hülse und Kapselkörper zueinander.

Ist wenigstens eines der beteiligten Elemente, also die Hülse und/oder der Kapselkörper, für eine vorzugsweise elastische Verformung ausgestaltet, so kann von der Zylinderform auch abgewichen werden, wenn durch die Verformbarkeit beim Verdrehen eine Abdichtung der Austrittsöffnung beibehalten wird. Beispielsweise kann bei einer Hülse mit zumindest elastischen Randbereichen, die sich an die Außenform des Kapselkörpers anschmiegen, auch ein ovaler Querschnitt des Kapselkörpers vorgesehen werden (oder auch andere Querschnitte, sofern die konvexen Krümmungsradien das Anschmiegen nicht behindern und keine konvexen Oberflächenbereiche vorliegen).

Das Schließen und Öffnen der Austrittsöffnung durch ein Verdrehen und/oder Verschieben der Hülse kann vorteilhafterweise so vorgesehen sein, dass die Hülse dabei am Kapselkörper verbleibt, so dass bei der Verwendung Hülse und Kapselkörper nicht als separate Elemente anfallen, die getrennt voneinander entsorgt werden müssten. Wird etwa die Austrittsöffnung durch einfaches Verdrehen der Hülse gegenüber den Kapselkörper freigelegt, muss der Bediener nicht eine abgezogene Hülse beiseitelegen, so dass die Handhabung insgesamt vereinfacht ist.

In einer anderen Variante der Ausgestaltung führt die Hülsenöffnung zu einem Applikationshilfsmittel der Hülse, insbesondere einer Kanüle.

Die Hülsenöffnung kann beispielsweise mit einer Kanüle versehen werden, so dass die Hülse damit nicht nur die Funktion eines Verschlusses für die Austrittsöffnung besitzt sondern auch noch als Unterstützung für ein Applikation oder ein anderweitiges Ausbringen des Dentalpräparates dient.

Hierbei kann einerseits wenigstens einer der Kolbenkörper im Kapselkörper verschiebbar sein, so dass durch ein Eindrücken des entsprechenden Kolbenkörpers in den Kapselkörper hinein der Mischraum verkleinert und damit Dentalpräparat aus dem Mischraum und durch das Applikationshilfsmittel ausgetragen werden kann. Andererseits können alternativ oder ergänzend auch ein gesonderter Kolben, der auf den Mischraum einwirkt, oder eine anderweitige geeignete Ausgestaltung des Mischraums vorgesehen werden.

In einer anderen Weiterführung ist der erste Kolbenkörper zum Verschließen der Austrittsöffnung ausgestaltet, wobei die Hülse in der zweiten Position von dem Kapselkörper getrennt ist und wobei die Hülse dazu ausgestaltet ist, beim Trennen der Hülse vom Kapselkörper den ersten Kolbenkörper zum Freilegen der Austrittsöffnung mitzunehmen.

Die Hülse kann vom Kapselkörper abgezogen werden, wobei hierbei auch der erste Kolbenkörper aus dem Kapselkörper entfernt wird, um so das Innere des Mischraums freizulegen, ähnlich einem Becher. Die Hülse und der erste Kolbenkörper können hierbei getrennte Elemente sein, die beispielsweise durch einen Formschluss miteinander gekoppelt sind. Die Hülse und der erste Kolbenkörper können aber auch integral geformt oder anderweitig innig miteinander verbunden sein.

Es ist zudem möglich, auch den zweiten Kolbenkörper aus dem Kapselkörper zu entfernen, wobei bei einer zweiteiligen Hülse auch hier wiederum der zweite Teil der Hülse ein Mitnehmen des zweiten Kolbenkörpers bewirken kann.

In einer Ausführungsform der Erfindung weisen Kolbenkörper und/oder Hülse ein oder mehrere Rastmittel zur Rastung von Kolbenkörper und Hülse zueinander in der ersten, der zweiten und/oder einer dritten Position auf.

Eine Rastung erlaubt eine gezielte Steuerung der Positionierung, so dass beispielsweise durch die Rastung dem Anwender bei den Benutzung durch ein akustisches oder haptisches Signal gezeigt wird, dass eine bestimmte Position erreicht ist. Die Rastung erlaubt es auch, eine Bewegung zwischen Hülse und Kapselkörper einzuschränken.

In einer anderen Ausführungsform sind der erste und zweite Kolbenkörper einander gegenüberliegend angeordnet, wobei sich der Mischraum zwischen dem ersten und zweiten Kolbenkörper befindet.

Durch gemeinsames Drücken auf einander gegenüberliegende Kolben, die mit den Kolbenkörpers zusammenwirken, können die Fluide in den Mischraum eingebracht werden. Hierbei liegen sich die Kolben bzw. Kolbenkörper nicht nur gegenüber, sondern sich vorzugsweise auch koaxial zueinander angeordnet.

In einer weiteren Ausführungsform sind der erste Kolbenkörper und/oder der zweite Kolbenkörper im Kapselkörper verschiebbar.

Bei verschiebbarem Kolbenkörper kann durch eine Ausübung von Druck auf den jeweiligen Kolbenkörper ein Druck auf in dem Mischraum befindliches Dentalpräparat ausgeübt werden, beispielsweise um das Dentalpräparat aus dem Mischraum durch die Austrittsöffnung auszutreiben.

In einer Ausgestaltung dieser Ausführungsform weist die Mischkapsel ein Blockiermittel auf, mit dem eine Verschiebbarkeit des bzw. der Kolbenkörper blockiert bzw. verhindert werden kann. Mit dem Blockiermittel kann die Verschiebbarkeit durch den Benutzer gezielt freigegeben werden, wodurch die Handhabbarkeit gesteigert werden kann. Vorzugsweise umfasst das Blockiermittel miteinander zusammenspielende Elemente, die eine erste blockierende Stellung und eine zweite freigebende Stellung einnehmen können. Besonders bevorzugt umfasst ein Übergang zwischen blockierender Stellung und freigebender Stellung ein Verdrehen von Kolbenkörper und Kapselkörper relativ zueinander.

In einer Ausführungsform der Erfindung ist der erste Kolbenkörper bis zu einer maximalen Eindringtiefe in den Kapselkörper verschiebbar, wobei der erste Kolbenkörper bei seiner maximalen Eindringtiefe an die Austrittsöffnung angrenzt.

Wird der erste Kolbenkörper zu seiner maximalen Eindringtiefe gebracht, befindet sich damit die Austrittsöffnung an einem Endbereich des verkleinerten Mischraums, was beispielsweise bei einer Entleerung von Vorteil sein kann.

In einer Ausführungsform der Erfindung ist die Austrittsöffnung in dem ersten und/oder dem zweiten Kolbenkörper vorgesehen und ist mit einem entfernbaren Verschlussmittel verschlossen.

Es ist nicht zwingend der Fall, dass die Austrittsöffnung in einer von den Kolbenkörpern separaten Wandung des Mischraums vorhanden ist. Es ist ebenso möglich, dass der Austritt durch einen der Kolbenkörper selbst hindurch erfolgt, insbesondere durch eine zunächst verstöpselte Durchgangsbohrung in Längsrichtung des Kolbenkörpers

Weist die Mischkapsel eine Hülse auf, die den Kapselkörper wenigstens teilweise umschließt und die gegenüber dem Kapselkörper
in wenigstens einer dritten und einer vierten Position anzuordnen ist, wobei die Hülse einen Hohlraum zum Aufnehmen einer Zumischkomponente aufweist, wobei die Hülse in der dritten Position so angeordnet ist, dass der Hohlraum mit dem Mischraum in Verbindung steht, so dass Zumischkomponente in den Mischraum gelangen kann, und die Hülse in der vierten Position so angeordnet ist, dass der Hohlraum gegenüber dem Mischraum und gegenüber einer Umgebung der Mischkapsel abgeschlossen ist, kann die Hülse neben der Hülsenöffnung (sofern vorgesehen) auch noch einen Raum (ggf. sogar mehrere) zur Aufnahme zumindest eines Pulvers o.ä. aufweisen. In einer Stellung ist durch die Hülse die Austrittsöffnung verschlossen, in einer anderen ist die Austrittsöffnung durch die Hülsenöffnung freigelegt, in einer dritten kann das Pulver o.ä. aus dem Raum in den Mischraum gelangen.

Im Folgenden wird die Erfindung anhand einiger Ausführungsbeispiele und unter Bezugnahme auf die beiliegenden Zeichnungen näher erläutert. Hierbei zeigen:
- Fig. 1: eine Explosionsdarstellung eines ersten Ausführungsbeispiels einer erfindungsgemäßen Mischkapsel,
- Fig. 2: Ansichten und Schnitte der Mischkapsel des ersten Ausführungsbeispiels,
- Fig. 3: perspektivische Ansichten der Mischkapsel des ersten Ausführungsbeispiels,
- Fig. 4: Ansichten und Schnitte eines Kapselkörpers der Mischkapsel des ersten Ausführungsbeispiels,
- Fig. 5: perspektivische Ansichten des Kapselkörpers der Mischkapsel des ersten Ausführungsbeispiels,
- Fig. 6: perspektivische Gitteransichten einer Hülse der Mischkapsel des ersten Ausführungsbeispiels,
- Fig. 7: Ansichten und Schnitte der Hülse der Mischkapsel des ersten Ausführungsbeispiels,
- Fig. 8: Ansichten und Schnitte eines Kolbens der Mischkapsel des ersten Ausführungsbeispiels,
- Fig. 9: Ansichten und Schnitte eines Kolbenkörpers der Mischkapsel des ersten Ausführungsbeispiels,
- Fig. 10: Ansichten und einen Schnitt einer Mischkapsel eines zweiten Ausführungsbeispiels welches nicht Teil der Erfindung ist,
- Fig. 11: Ansichten und einen Schnitt einer Mischkapsel eines dritten Ausführungsbeispiels welches nicht Teil der Erfindung ist,
- Fig. 12: Ansichten einer Mischkapsel eines vierten Ausführungsbeispiels, welches nicht Teil der Erfindung ist, einem Ausgangszustand,
- Fig. 13: Ansichten der Mischkapsel des vierten Ausführungsbeispiels in einem Ausgangszustand und einem Zustand nach einem Ausbringen des gemischten Dentalmaterials,
- Fig. 14: teilweise Ansichten und teilweise Schnitte der Mischkapsel des vierten Ausführungsbeispiels, mit denen die Verwendung der Mischkapsel schrittweise illustriert wird.

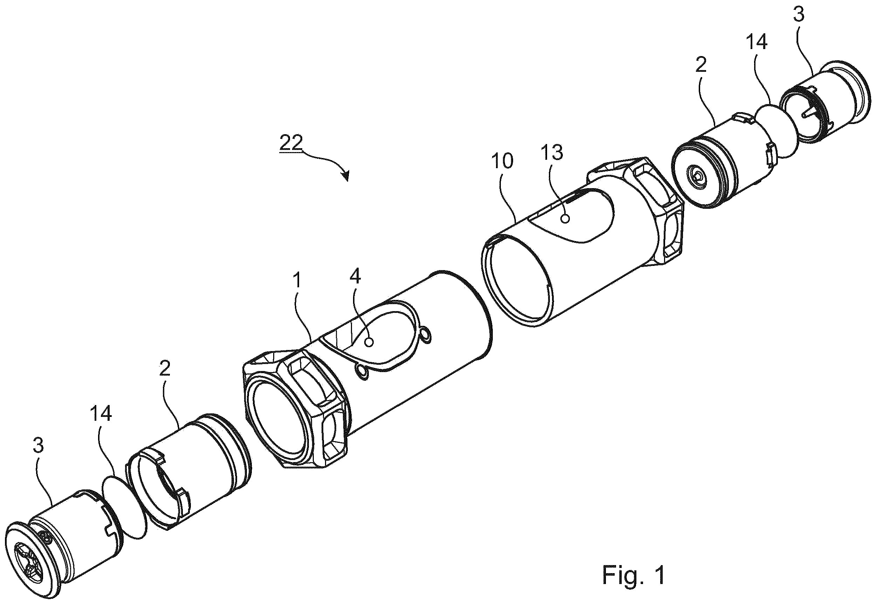

Fig. 1 zeigt eine Explosionsdarstellung eines ersten Ausführungsbeispiels einer erfindungsgemäßen Mischkapsel 22.

Die Mischkapsel 22 umfasst einen Kapselkörper 10, eine Hülse 11, zwei Kolbenkörper 2 mit jeweils zugehörigen Kolben 3, die wiederum mit einer Folie 14 versehen sind.

Der Kolbenkörper 1 weist im Wesentlichen eine zylindrische Form auf, wobei im Betriebszustand die Hülse 10 den Kapselkörper 1 im Wesentlichen umschließt. In die zunächst offenen Enden des Kapselkörpers sind die Kolbenkörper 2 eingesetzt, wobei jeweils in einem Kolbenkörper ein auf der dem Kolbenkörper 2 zugewandten Seite mit einer Folie 14 verschlossener Kolben 3 vorgesehen ist.

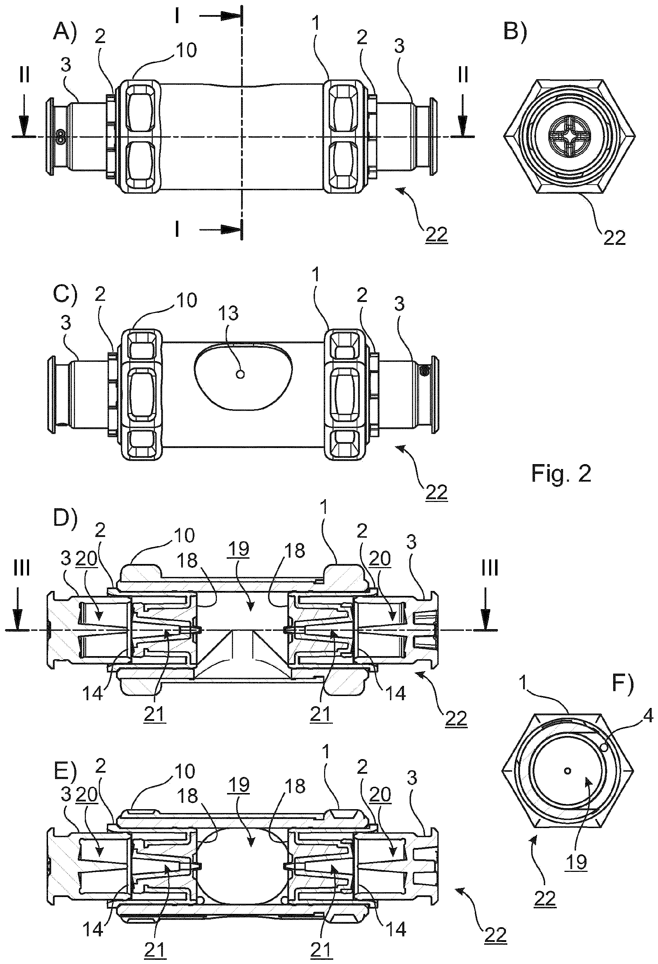

Fig. 2 zeigt Ansichten und Schnitte der Mischkapsel 22 des ersten Ausführungsbeispiels.

Fig. 2A zeigt eine Seitenansicht der Mischkapsel 22 mit auf dem Kapselkörper 1 aufgeschobener Hülse 10, wobei die Kolbenkörper 2 jeweils in den Kapselkörper 1 eingebracht sind und die Kolben 3 in geringem Maße in die Kolbenkörper 2 eingeführt sind.

In Fig. 2A sind zwei Schnittebenen angedeutet, wobei die Schnittebene I der Darstellung in Fig. 2F entspricht und die Schnittebene II in Fig. 2D illustriert ist.

Fig. 2B zeigt eine Ansicht der Mischkapsel 22 entlang ihrer Längsachse.

Fig. 2C zeigt eine Ansicht der Mischkapsel 22, die im Wesentlichen der Darstellung aus Fig. 1A entspricht, wobei gegenüber der Darstellung von Fig. 1A die Mischkapsel um ihre Längsachse rotiert ist, so dass in der Darstellung von Fig. 2C die Hülsenöffnung 13 der Hülse 10 erkennbar ist.

Wie in Fig. 2D zu erkennen, begrenzen die Kolbenkörper, die in den Kapselkörper 1 eingeführt sind, im Kapselkörper einen Mischraum, der somit durch die Seitenwandung des Kapselkörpers 1 und die dem Mischraum 19 zugewandten Seiten 18 der Kolbenkörper 2 definiert wird.

In den Kolben 3 liegt jeweils ein Hohlraum 20 vor, der in dem eine fluide Komponente (nicht dargestellt) des zu mischenden Teilpräparats vorliegt.

Dieser Hohlraum 20 wird zunächst durch die Folie 14 abgeschlossen, so dass die entsprechende Komponente im Kolben 3 sicher gelagert werden kann. Die Kolbenkörper 2 weisen jeweils einen Kanal 21 auf, durch den die Komponente aus den Hohlraum 20, wenn dieser geöffnet wird, in den Mischraum 19 gelangen kann.

Fig. 2E zeigt einen anderen Schnitt durch die Mischkapsel 22, wie er durch die Schnittebene III in Fig. 2D angedeutet wird.

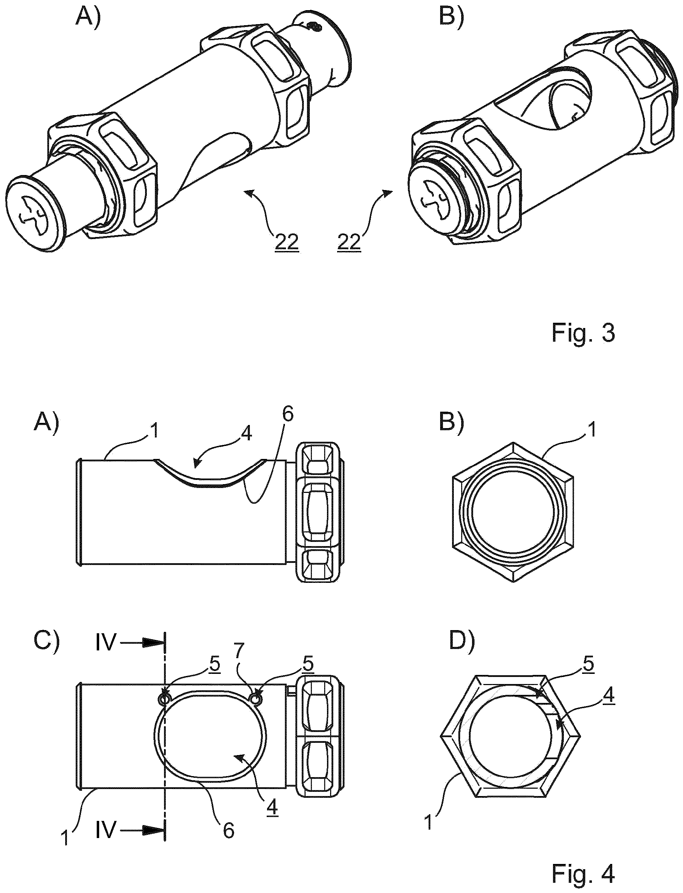

Fig. 3 zeigt perspektivische Ansichten der Mischkapsel 22 des ersten Ausführungsbeispiels.

In der Darstellung von Fig. 3A liegt die Mischkapsel 22 in einer Form vor, wie sie vor ihrer Benutzung zutreffen kann. Die Kolben 3 sind zwar bereits in die Kolbenkörper 2 eingeführt, allerdings nur so weit, dass die Folie 14 noch in Takt ist.

Fig. 3B zeigt die Mischkapsel in einem Zustand, in dem die Kolben 3 jeweils vollständig in die Kolbenkörper 2 eingeführt sind, so dass das erste und zweite Fluid, das zunächst in diesem Kolben 3 bzw. deren Hohlräumen 20 gehalten wurde, durch die Kanäle 21 in den Mischraum 19 gelangt sind, wo diese mit einer dort vorgehaltenen Mischkomponente vermischt wurden. Im Vergleich zu Fig. 3A ist die Hülse verdreht, so dass die Hülsenöffnung und die Austrittsöffnung des Kapselkörpers miteinander in Deckung gebracht sind, so dass der Mischraum gegenüber der Außenwelt freigelegt ist.

Die Mischkapsel umfasst, wie bereits oben dargestellt, einen inneren, zylinderförmigen Kapselkörper 1 und eine äußeren Hülse 10. Beide weisen ein jeweiliges Loch (Austrittsöffnung 4 und Hülsenöffnung 13) auf, die durch Drehung zur Deckung kommen, wodurch eine Öffnung der Mischkapsel als Ganzes herbeigeführt wird. Die beiden Enden des Kapselkörpers 1 sind jeweils durch einen Kolbenkörper 2 verschlossen, der in diesem Ausführungsbeispiel fest im Kapselkörper 1 angebracht ist, auch wenn der Kolbenkörper 2 zunächst als separates Bauelement gebildet ist. Der Kolbenkörper kann allerdings auch integral zusammen mit dem Kapselkörper gebildet sein oder auch separates und gegenüber dem Kapselkörper verschiebbares Teil verbleiben. Diese Kolbenkörper 2 haben die Aufgabe, den Mischraum 19 innerhalb des Kapselkörpers 1 zu begrenzen und gleichzeitig die Zuführung von flüssigen und/oder pastösen Komponenten zu ermöglichen. An den Kolbenkörpern 2 ist jeweils ein weiterer Kolben 3 angebracht. Diese Kolben 3 beinhalten die erwähnten flüssigen und/oder pastösen Massen, die durch Druck auf die Kolben 3 in Richtung Mischraum 19 durch die Kolbenkörper 2 in den Mischraum gelangen. Die Kolben 3 können dabei von einer Folie 14 verschlossen sein, die dann bei Druck auf den Kolbenkörper 2 von diesem jeweils zerrissen wird.

Das fertige Mischsystem in diesem Ausführungsbeispiel umfasst mindestens zwei flüssige bis pastöse (A1 und A2) und eine feste, stopfbare, flüssige oder pastöse Komponente (C1). In den Kolben 3 befinden sich die Komponenten A1 und A2, innerhalb des Mischraums 19 der Kapsel 22 lagert mindestens eine Komponente C1. Durch Aktivierung der Kolben 3 liegen alle Komponenten innerhalb des Mischraumes 19 des Kapselkörpers 1 vor. Die Komponenten können nun entweder mit Hilfe eines handelsüblichen Kapselmischers gemischt oder von Hand mittels eines geeigneten Hilfsmittels (z.B. eines Spatels) bei geöffneter Kapsel 22 verrührt werden. Dabei ist die Kapsel 22 durch Drehen der äußeren Hülse 10 zuvor zu öffnen. Die in der Kapsel 22 vorhandenen Entlüftungsschlitze lassen dabei den durch die Aktivierung entstandenen Überdruck entweichen.

Die Applikation erfolgt nach dem Mischen und Öffnen ebenfalls durch Entnahme mittels eines geeigneten Hilfsmittels.

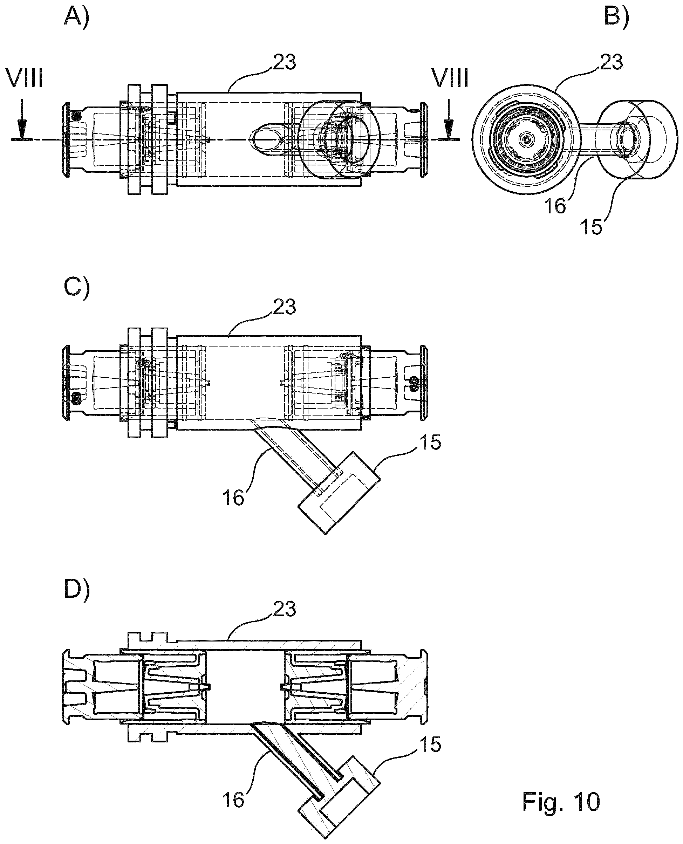

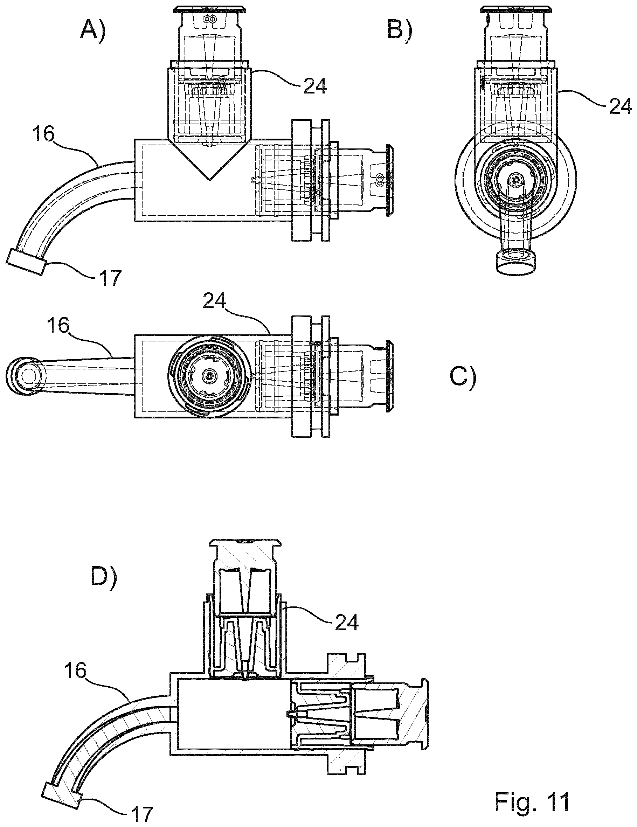

Ebenfalls ist eine Applikation auch durch eine an der Kapsel angebrachte Austragskanüle (siehe auch Fig. 10 und 11) denkbar, dabei wird die Kapsel beispielsweise in einem geeigneten Austragegerät eingespannt und durch Druck auf wenigstens eine im Kapselkörper bewegliche Kombination von Kolben Kolbenkörper entleert.

In einem Fall, bei dem mehr als drei Komponenten benötigt werden, von denen zwei aber - in Abwesenheit der anderen Komponenten - im Mischraum gemeinsam vorliegen können, kann der Mischraum insbesondere mit Feststoffen oder stopfbaren Dentalkompositen, in denen die reaktiven Bestandteile vorliegen, bestückt werden. Somit ist eine Vermischung dieser Bestandteile vor der Aktivierung der Kolben 3 nicht möglich und erfolgt erst durch das anschließende Mischen aller Komponenten.

Fig. 4 zeigt Ansichten und Schnitte eines Kapselkörpers 1 der Mischkapsel 22 des ersten Ausführungsbeispiels.

Die Fig. 4A, 4B und 4C zeigen verschiedene Ansichten des Kapselkörpers 1, wobei Fig. 4D eine durch die Schnittebene IV in Fig. 4C angedeuteten Schnitt darstellt. Der Kapselkörper 1 weist eine Austrittsöffnung 4 auf, die von einer Dichtung 6 umgeben ist. In der Nähe des Randbereichs der Austrittsöffnung 4 sind vorliegend zwei Entlüftungsöffnungen 5 vorgesehen, die jeweils mit einer eigenen Dichtung 7 versehen sind.

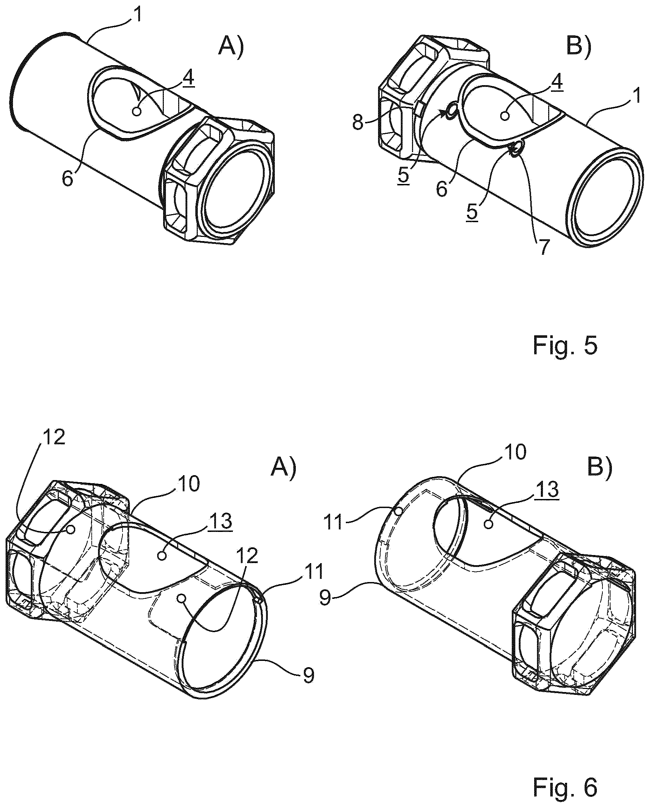

Fig. 5 zeigt perspektivische Ansicht des Kapselkörpers 1 der Mischkapsel 22 des ersten Ausführungsbeispiels.

Auch in den Fig. 5A und 5B sind, wie schon in Fig. 4, die Einzelheiten des Kapselkörpers, nämlich Austrittsöffnung 4, Entlüftungsöffnungen 5, Dichtungen 6 und 7 zu erkennen.

In der Darstellung von Fig. 5B ist zudem der Anschlag 8 erkennbar, der mit einer Ausnehmung 11 der Hülse zusammenwirkt, um eine Begrenzung der Relativbewegung (genauer Verdrehung) zwischen Kapselkörper 1 und Hülse 10 zu bewirken (siehe unten).

Fig. 6 zeigt perspektivische Gitteransichten einer Hülse 10 der Mischkapsel 22 des ersten Ausführungsbeispiels.

Wie auch der Kapselkörper 1 (siehe oben) weist die Hülse im Wesentlichen eine zylindrische Form auf, wobei der Innendurchmesser der Hülse 10 so ausgewählt ist, dass die Hülse 10 im Zusammenspiel mit dem Kapselkörper 1 eine abdichtende Wirkung entfalten kann.

Die Hülse 10 weist eine Hülsenöffnung 13 auf, deren Größe und Form im Wesentlichen der Größe und Form der Austrittsöffnung 4 des Kapselkörpers 1 entspricht.

In Bereichen, deren Position auf die Position der Entlüftungsöffnungen 5 des Kapselkörpers abgestellt sind, ist die Wandung der Hülse 10 so ausgestaltet, dass ein flächiger Rücksprung vorliegt, so dass dadurch Entlüftungskanäle 12 gebildet sind. Der Kragen 9 der Hülse 10 ist mit einer Ausnehmung 11 versehen, die zur Aufnahme des Anschlags 8 dient und mit diesem zusammenwirkt, um eine relative Verdrehung von Kapselkörper 1 und Hülse 10 zu begrenzen.

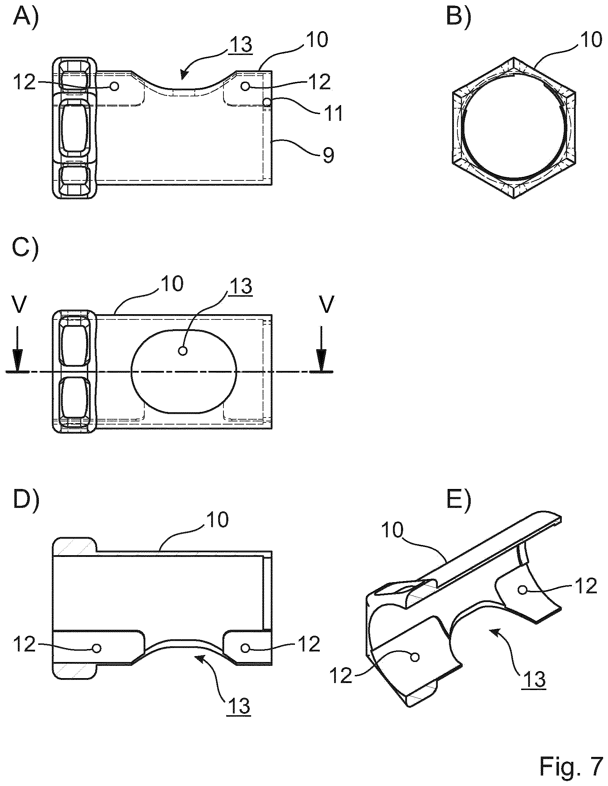

Fig. 7 zeigt Ansichten und Schnitte der Hülsen der Mischkapsel 22 des ersten Ausführungsbeispiels.

Die Figuren 7A bis 7C deuten mit gestrichelten Linien die innere Struktur der Hülse 10 an, die ansonsten durch die Außenwand nicht zu erkennen wäre.

Fig. 7D zeigt eine Schnittansicht entlang der in Fig. 7C angedeuteten Schnittebene V.

In Fig. 7D ist ein Teil der Hülsenöffnung 13 zu erkennen, wobei benachbart zur Hülsenöffnung 13 die Wandung der Hülse 10 mit einem Rücksprung versehen ist, so dass sich im Bereich des damit ausgesparten Materials ein Entlüftungskanal 12 befindet.

Fig. 7E ist eine perspektivische Ansicht des Schnitts aus Fig. 7D.

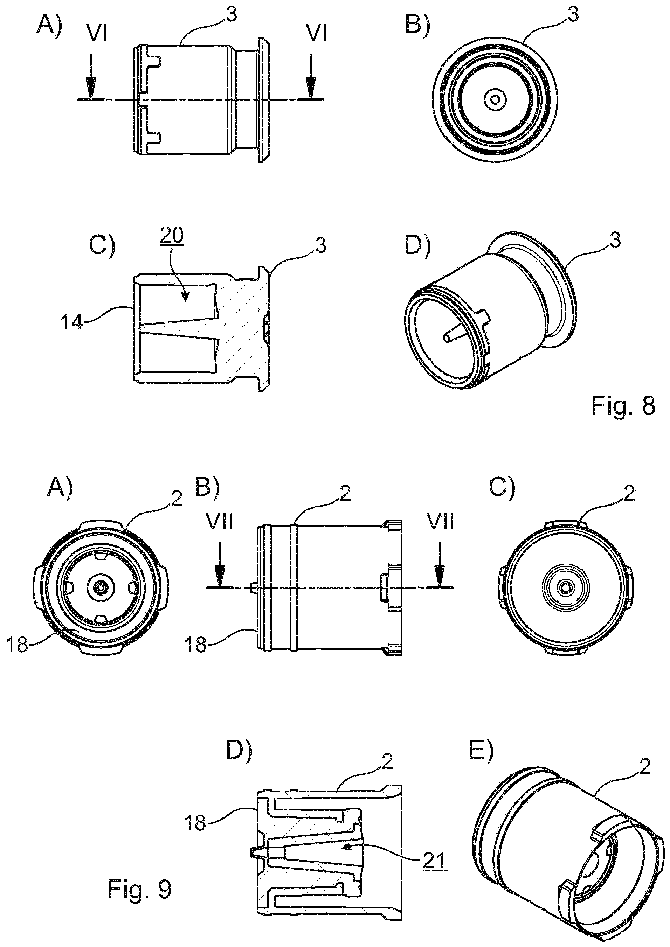

Die Figuren 8 und 9 zeigen Ansichten und Schnitte eines Kolbens 3 der Mischkapsel 22 des ersten Ausführungsbeispiels und eines Kolbenkörpers 2 der Mischkapsel 22 des ersten Ausführungsbeispiels.

Hinsichtlich der Details von Kolbenkörper 2 und Kolben 3 wird hier Bezug genommen auf den Inhalt der europäischen Patentanmeldung EP 2 510 897 A2, deren Offenbarung, soweit sie sich auf Einzelheiten des Kolbenkörpers 2 und des Kolbens 3 bezieht, durch Inbezugnahme hier inkorporiert ist.

Fig. 10 zeigt Ansichten und einen Schnitt einer Mischkapsel 23 eines zweiten Ausführungsbeispiels der Erfindung.

Wie schon beim ersten Ausführungsbeispiel liegen hier ein im Wesentlichen zylinderförmiger Kapselkörper vor, in den Kolbenkörper und Kolben eingebracht sind.

Abweichend von der Erfindung weist dieses Ausführungsbeispiel allerdings keine Hülse auf, wobei statt dessen die Austrittsöffnung des Mischraums durch eine Applikationskanüle 16 gebildet wird, die mit einem Verschluss 15 verschlossen ist, so dass es zur Entfernung des Verschlusses 15 der Mischraum durch den Kapselkörper und die Kolbenkörper zumindest insoweit hermetisch abgeschlossen ist, dass keine unerwünschten Einflüsse von außen in den Mischraum gelangen. Wie auch schon beim ersten Ausführungsbeispiel können Entlüftungsöffnungen (nicht dargestellt) vorgesehen sein, um bei der Mischung und eventuellen Reaktion der Mischkomponenten entstehende Gase abzuleiten.

Fig. 11 zeigt Ansichten und einen Schnitt einer Mischkapsel 24 eines dritten Ausführungsbeispiels welches nicht Teil der Erfindung ist. Im Gegensatz zu dem ersten und zweiten Ausführungsbeispiel sind bei der Mischkapsel 24 nicht beide Kolbenkörper (und damit auch Kolben) entlang der Längsachse der Mischkapsel 24 angeordnet. Vorliegend befindet sich nur einer der Kolbenkörper in einer Position, in der er entlang der Längsachse der Mischkapsel 24 angeordnet ist, wobei auf der diesem Kolbenkörper gegenüberliegenden Seite des Kapselkörpers eine Applikationskanüle 16 angeformt ist, die die Austrittsöffnung des Mischraums im Kapselkörper bestimmt und die mit einem Verschluss 17 verschlossen ist. Der zweite Kolbenkörper ist hier in einer an einer Seitenwandung des Kapselkörpers angeformten Auskragung eingebracht und schließt ebenfalls an den Mischraum an.

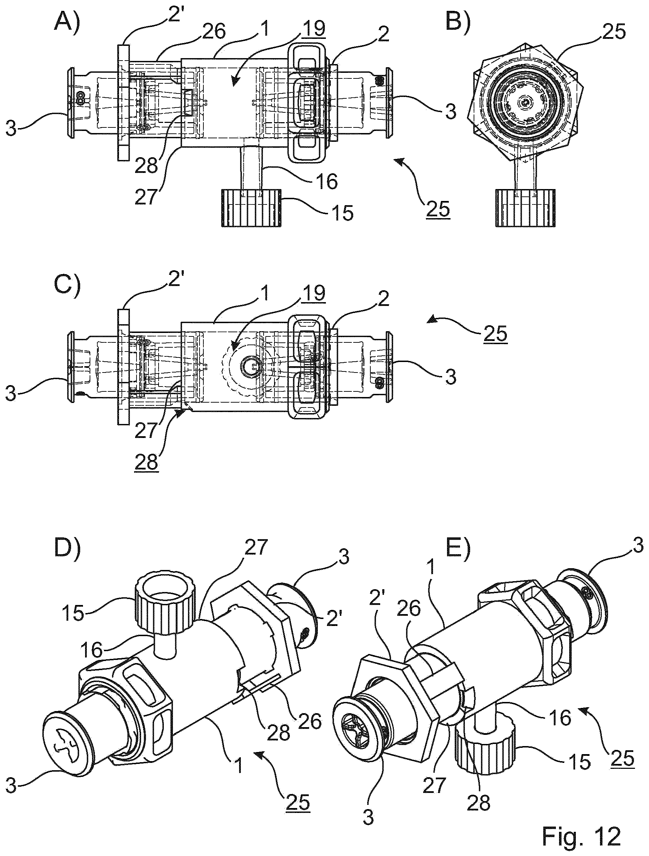

Fig. 12 zeigt Ansichten einer Mischkapsel 25 eines vierten Ausführungsbeispiels, welches nicht Teil der Erfindung ist, in einem Ausgangszustand. Hinsichtlich des Aufbaus entspricht die Mischkapsel 25 des vierten Ausführungsbeispiels weitgehend der Mischkapsel 23 des zweiten Ausführungsbeispiels, die in Fig. 10 gezeigt ist.

Anders als beim zweiten Ausführungsbeispiel ist die mit einem Verschluss 15 verschließbare Applikationskanüle 16 hier so vorgesehen, dass sie sich im Wesentlichen im rechten Winkel zum Kapselkörper 1 erstreckt.

Ferner abweichend von der Mischkapsel 23 des zweiten Ausführungsbeispiels ist die Mischkapsel 25 mit einem Kolbenkörper 2' versehen, der wahlweise gegenüber einer Längsverschiebung innerhalb des Kapselkörpers 1 in Richtung des gegenüberliegenden Kolbenkörpers 2 blockiert und freigegeben ist. Bei einer Freigabe gegenüber der Längsverschiebung kann der Kolbenkörper 2' in Richtung des gegenüberliegenden Kolbenkörpers 2 gedrückt werden, wobei damit der Mischraum 19, der von dem Kapselkörper 1 und den Kolbenkörpers 2, 2' begrenzt wird, verkleinert wird, so dass im Mischraum 19 vorliegendes (fertig gemischtes) Dentalpräparat (nicht dargestellt) durch die Applikationskanüle 16 ausgetrieben wird.

Der Kolbenkörper 2', der sich bereits im in Fig. 12 dargestellten Ausgangszustand teilweise im Kapselkörper 1 erstreckt, ist mit einem vorspringenden Arm 26 versehen, der an einen Absatz 27 des Kapselkörpers 1 anstößt, so dass beim Anstoßen des Arms 26 an den Absatz 27 ein weiteres Eindrücken des Kolbenkörpers 2' in den Kapselkörper 1 verhindert wird. In einem solchen Zustand kann in Längsrichtung der Mischkapsel 25 auf den Kolben 3 im Kolbenkörper 2' eine Kraft zum Eindrücken des Kolbens 3 in den Kolbenkörper 2' aufgebracht werden, ohne dass der Kolben 3 durch ein Verschieben des Kolbenkörpers 2' dieser Kraft ausweichen könnte.

In einer anderen Ausführung kann das Ausweichen auch durch eine geeignete Einstellung der zur Verschiebung des Kolbens 3 im Kolbenkörper 2' und des Kolbenkörpers 2' im Kapselkörper 1 notwendigen Kräfte verhindert werden.

Ein Vorteil der selektiven Blockierung einer Relativverschiebung des Kolbenkörpers 2' im Kapselkörpers 1 durch eine bauliche Maßnahme liegt allerdings darin, dass der Übergang von einem Vorgang des Eindrückens des Kolbens 3 in den Körperkörper 2' einerseits zu einem Vorgang des Eindrückens des Kolbenkörpers 2' in den Kapselkörper 1 definierter vorgenommen werden kann.

Der Absatz 27 ist mit einer Rampe 28 versehen, die einen Übergang von einer Ebene der Außenwandung des Kolbenkörpers 2' (die an einer Innenwandung des Kapselkörpers 1 anliegt) zur Außenwandung des Kapselkörpers 1 darstellt. Bei einer relativen Verdrehung von Kolbenkörper 2' und Kapselkörper 1 können der Arm 26 und die Rampe 28 passend zueinander positioniert werden, so dass der Arm 26 nicht mehr durch den Absatz 27 gegenüber einer Verschiebung in Längsrichtung blockiert und stattdessen durch die Rampe 28 bei einem Verschieben auf die Außenwandung des Kapselkörpers 1 geführt wird.

Als Alternative oder als Ergänzung hierzu kann der Arm (oder ein anderes entsprechendes Element) auch entfernbar ausgeführt sein (z.B. mit einer Sollbruchstelle). Werden beispielsweise zwei Arme (von denen einer entfernbar ist) im Zusammenspiel mit nur einer Rampe vorgesehen, so kann auch bei einer ungewollten Verdrehung von Kolbenkörper und Kapselkörper zueinander nur dann der Kolbenkörper weiter in den Kapselkörper eingeschoben werden, wenn der entfernbare Arme entfernt und der verbleibende Arm und die Rampe passend positioniert werden.

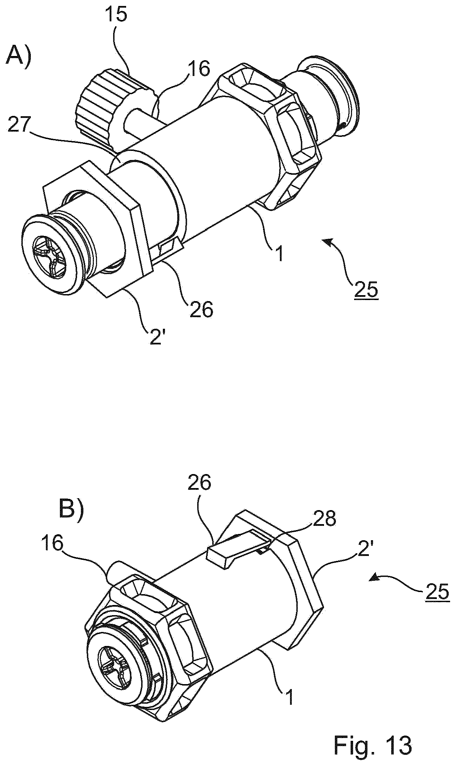

Fig. 13 zeigt Ansichten der Mischkapsel 25 des vierten Ausführungsbeispiels in einem Ausgangszustand und einem Zustand nach einem Ausbringen des gemischten Dentalmaterials.

Die Darstellung des Ausgangszustands entspricht den Darstellungen aus Fig. 12 aus einem anderen Blickwinkel. In der Darstellung des Zustands nach einem Ausbringen des gemischten Dentalmaterials ist zu erkennen, dass sich der Arm 26 nach einer Führung durch die Rampe 28 nun über die Außenwandung des Kapselkörpers 1 erstreckt.

Es ist auch möglich, anstelle der Rampe 28 eine Nut (nicht dargestellt) in der Außenwandung des Kapselkörpers vorzusehen, in die der Arm eindringen kann.

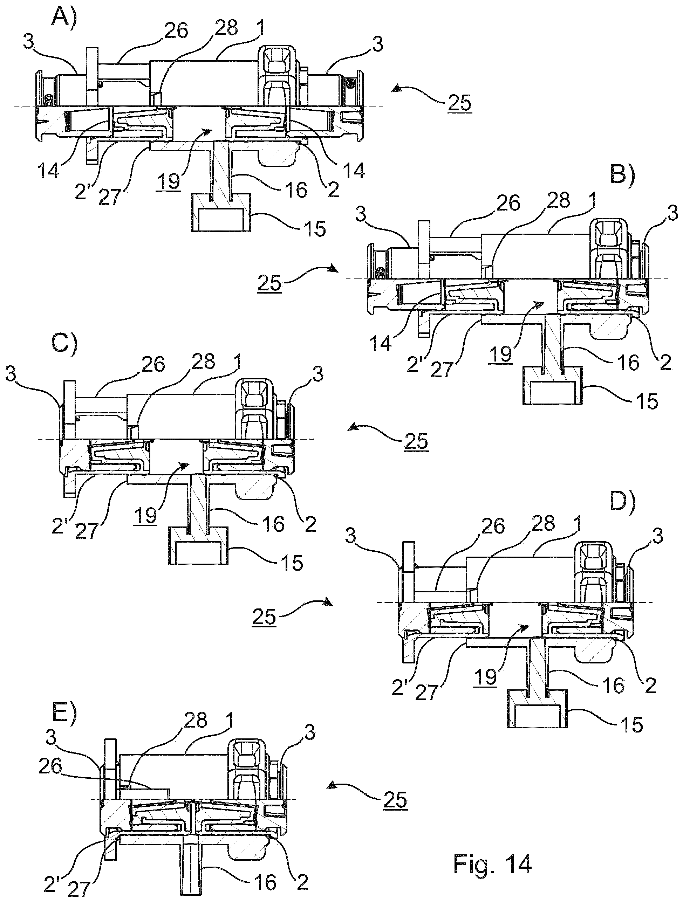

Fig. 14 zeigt teilweise Ansichten und teilweise Schnitte der Mischkapsel 25 des vierten Ausführungsbeispiels, mit denen die Verwendung der Mischkapsel 25 schrittweise illustriert wird.

Fig. 14 A) zeigt den Ausgangszustand, bei dem die Kolben 3 nur wenig in die Kolbenkörper 2, 2' eingebracht sind und die in den Kolben 3 untergebrachten Fluide (nicht dargestellt) durch eine jeweilige Folie 14 dicht im Kolben 3 eingeschlossen sind.

Übergehend zu Fig. 14 B) wurde der Kolben 3 in den Kolbenkörper 2 eingebracht und nach einem Aufbrechen der Folie 14 wurde damit das Fluid in den Mischraum 19 gedrückt, wo es auf eine Mischkomponente (nicht dargestellt) trifft.

Übergehend zu Fig. 14 C) wurde auch der Kolben 3 in den Kolbenkörper 2' eingebracht, so dass auch hier nach Zerstörung der Folie 14 das im Kolben 3 enthaltene Fluid in den Mischraum 19 gelangt.

Die separate Darstellung der Figuren 14 B) und 14 C) dient der Illustrierung und es ist möglich, die Reihenfolge umzukehren. Zudem können auch die in den Kolben 3 enthaltenden Fluide im Wesentlichen gleichzeitig in den Mischraum 19 eingebracht werden.

Beim Vergleich von Fig. 14 C) und Fig. 14 D) ist zu erkennen, dass Fig. 14 D) einen Zustand darstellt, bei dem der Kolbenkörper 2' gegenüber dem Kapselkörper 1 so verdreht wurde, dass der Arm 26 in Flucht mit der Rampe 28 liegt. Im Gegensatz zu Fig. 14 D) zeigen die Fig. 14 A) bis C) Zustände, bei denen der Arm 26 an einem Absatz 27 bzw. das Ende des Körperkörpers 1 anstößt. Im Zustand von Fig. 14 D) ist die Mischkapsel dafür bereit, dass der Kolbenkörper 2' in den Kapselkörper 1 eingeschoben wird.

Fig. 14 E) zeigt einen Zustand, bei dem der Kolbenkörper 2' vollständig in den Kapselkörper 1 eingeschoben ist, wobei gemischtes Dentalpräparat (nicht gezeigt) beim Einschieben aus dem Mischraum 19 durch die Applikationskanüle 16 ausgetrieben wurde. Die Kolbenkörper 2, 2' stoßen nun theoretisch aneinander an, so dass der Mischraum 19 theoretisch auf Null reduziert wurde. In der Praxis kann es vorkommen, dass eine komplette Entleerung nicht erreicht wird.

Es ist möglich, dass alle Kolbenkörper der Mischkapsel für eine Verschiebbarkeit vergleichbar der des Kolbenkörpers 2' ausgestaltet sind. Werden beispielsweise drei Kolbenkörper/Kolben-Kombinationen vorgesehen, von denen zwei einander gegenüberliegen, können diese zwei Kolbenkörper so ausgestaltet sein, dass sie im eingeschobenen oder eingedrückten Zustand einen Restraum (verkleinerter Mischraum) definieren, dessen Querschnitt dem dritten Kolbenkörper entspricht, wobei dann durch Eindrücken des dritten Kolbenkörpers in diesen Querschnitt das verbleibende Dentalpräparat durch eine Austrittsöffnung ausgebracht wird, die beispielsweise dem dritten Kolbenkörper gegenüberliegt.

Wie bereits oben angemerkt, ist die Mischkapsel 25 des vierten Ausführungsbeispiels in einigen Aspekten ähnlich zur Mischkapsel 23 des zweiten Ausführungsbeispiels. Anders als dort sind aber hier Kolbenkörper 2' und Kapselkörper 1 für eine Verschiebbarkeit ausgestaltet. Nach dem Mischen und vor einem Ausbringen sind Kolbenkörper 2' und Kapselkörper 1 vorteilhafterweise noch arretiert, erst eine Drehung (in anderen Ausführungsformen kann auch eine andere Maßnahme vorgesehen sein) gibt die Verschiebbarkeit frei. Durch den Druck in Längsrichtung fördert das Material dann durch den Rüssel als Beispiel einer Applikationskanüle. Die verschiebbare Länge entspricht hierbei vorzugsweise der Länge des Mischraums 19.

Diese Ausführung erleichtert dem Anwender die Entnahme, ohne dass ein zusätzliches Austragegerät notwendig wäre.

Die vorliegende Erfindung ermöglicht die Bereitstellung eines homogen gemischten Dentalmaterials, bestehend aus flüssigen und/oder pastösen und/oder stopfbaren und/oder festen Komponenten, die räumlich getrennt in einer Mischkapsel vorliegen.

Die erfindungsgemäße Mischkapsel ermöglicht eine Lagerung und Mischung von drei und mehr Komponenten in nur einem System. Durch einfache Aktivierung und kurzem Mischvorgang kann somit ein Dentalmaterial mit überdurchschnittlichen Materialeigenschaften bereitgestellt werden, da ansonsten unverträgliche Komponenten räumlich getrennt, aber dennoch zusammen in einem System vereint sind. Besonders hilfreich ist dabei die mögliche Verwendung von zwei unterschiedlich viskosen Komponenten A1 und A2, was sich zum einen vorteilhaft auf das Mischergebnis auswirkt, zum anderen ermöglicht es, verschiedenste Kombinationsmöglichkeiten der Komponenten C1 bis Cn, deren Viskosität dadurch nahezu uneingeschränkt wählbar ist.

Die Erfindung sieht in einer Ausführung eine Mischkapsel zur Herstellung eines Dentalpräparats vor, mit einem Kapselkörper mit einem Mischraum zum Aufnehmen einer Mischkomponente und zum Mischen des Dentalpräparates aus der Mischkomponente, einem ersten Fluid und einem zweiten Fluid und mit einer Austrittsöffnung zum Ausbringen des Dentalpräparates, einen ersten Hohlraum zum Aufnehmen des ersten Fluids, einem ersten Kanal zum Führen des ersten Fluids, einem zweiten Hohlraum zum Aufnehmen eines zweiten Fluids, einem zweiten Kanal zum Führen des zweiten Fluids, wobei beide Hohlräume relativ zum Mischraum verschoben werden können, wodurch beide Fluids durch die ihnen zugeordneten Kanäle in den Mischraum geleitet werden und sich dort miteinander vermischen können.

Hierbei kann zur Aktivierung auf den ersten Hohlraum eine Kraft ausgeübt werden, die eine relative Verschiebung des ersten Hohlraums zum Mischraum verursacht, wobei unter Umständen der Mischraum durch diese Verschiebung verkleinert wird.

Zur Aktivierung kann auf den ersten Hohlraum eine Kraft ausgeübt werden, die eine relative Verschiebung des ersten Hohlraums zum Mischraum verursacht, wobei Richtung und Betrag der Kraft geeignet sind, auch eine relative Verschiebung des zweiten Hohlraums zum Mischraum zu verursachen.

Vorzugsweise besitzt der jeweilige Kanal an seinem mischraumseitigen Ende Verschlussmittel besitzt, die durch Einwirkung eines Flüssigkeitsdrucks den Weg in den Mischraum freigeben.

Insbesondere kann sich im Mischraum eine dritte Komponente befinden, die sich mit der ersten und mit der zweiten Komponente vermischen kann.

Vorzugsweise beträgt die Länge der Kapsel beim Mischvorgang weniger als 40 mm.

Es ist ferner bevorzugt, wenn der Mischraum Vorkehrungen zur Druckentlastung (von komprimiertem Gas) besitzt, die verhindern, dass beim Öffnen des Mischraums Flüssigkeits- oder Pastenteile herausspritzen.

### Bezugszeichenliste

- 1: Kapselkörper
- 2, 2': Kolbenkörper
- 3: Kolben
- 4: Austrittsöffnung
- 5: Entlüftungsöffnung
- 6: Dichtung
- 7: Dichtung
- 8: Anschlag
- 9: Kragen
- 10: Hülse
- 11: Ausnehmung
- 12: Entlüftungskanal
- 13: Hülsenöffnung
- 14: Folie
- 15: Verschluss
- 16: Applikationskanüle
- 17: Verschluss
- 18: dem Mischraum zugewandte Seite des Kolbenkörpers
- 19: Mischraum
- 20: Hohlraum
- 21: Kanal
- 22, 23, 24, 25: Mischkapsel
- 26: Arm
- 27: Absatz
- 28: Rampe

## Patentansprüche

1. Mischkapsel (22, 23, 24, 25) zur Herstellung eines Dentalpräparats, wobei die Mischkapsel (22, 23, 24, 25) aufweist:
einen Kapselkörper (1) mit einem Mischraum (19) zum Aufnehmen einer Mischkomponente und zum Mischen des Dentalpräparates aus der Mischkomponente, einem ersten Fluid und einem zweiten Fluid und mit einer Austrittsöffnung (4) zum Ausbringen des Dentalpräparates,
einen ersten Hohlraum (20) zum Aufnehmen des ersten Fluids,
einen ersten Kolbenkörper (2, 2'), der den Mischraum (19) im Kapselkörper (1) begrenzt und der einen ersten Kanal (21) zum Führen des ersten Fluids von dem ersten Hohlraum (20) in den Mischraum (19) aufweist,
einen zweiten Hohlraum (20) zum Aufnehmen des zweiten Fluids und
einen zweiten Kolbenkörper (2, 2'), der den Mischraum (19) im Kapselkörper (1) begrenzt und der einen zweiten Kanal (21) zum Führen des zweiten Fluids von dem zweiten Hohlraum (20) in den Mischraum (19) aufweist,
**dadurch gekennzeichnet, dass**
A) die Mischkapsel (22) eine Hülse (10) aufweist, die den Kapselkörper (1) wenigstens teilweise umschließt und die gegenüber dem Kapselkörper (1) in wenigstens einer ersten und einer zweiten Position anzuordnen ist, wobei die Hülse (10) in der ersten Position die Austrittsöffnung (4) verschließt und die Austrittsöffnung (4) in der zweiten Position freigelegt ist, so dass das Dentalpräparat durch die Austrittsöffnung (4) ausgebracht werden kann, und/oder
B) die Mischkapsel (22, 23, 24, 25) eine Hülse (10) aufweist, die den Kapselkörper (1) wenigstens teilweise umschließt und die gegenüber dem Kapselkörper (1) in wenigstens einer dritten und einer vierten Position anzuordnen ist, wobei die Hülse (10) einen Hohlraum zum Aufnehmen einer Zumischkomponente aufweist, wobei die Hülse (10) in der dritten Position so angeordnet ist, dass der Hohlraum mit dem Mischraum (19) in Verbindung steht, so dass Zumischkomponente in den Misch-raum (19) gelangen kann, und die Hülse in der vierten Position so angeordnet ist, dass der Hohlraum gegenüber dem Mischraum (19) und gegenüber einer Umgebung der Mischkapsel (22, 23, 24, 25) abgeschlossen ist.

2. Mischkapsel (22) nach Aspekt A) von Anspruch 1,
wobei die Hülse (10) eine Hülsenöffnung (13) aufweist und durch ein gegenseitiges Verdrehen und/oder Verschieben von Hülse (10) und Kapselkörper (1) Hülsenöffnung (13) und Austrittsöffnung (4) miteinander in der zweiten Position in Deckung gebracht werden können, so dass das Dentalpräparat durch die Austrittsöffnung (4) und die Hülsenöffnung (13) ausgebracht werden kann, und voneinander in der ersten Position getrennt werden können, so dass die Hülse (10) die Austrittsöffnung (4) verschließt.

3. Mischkapsel (22) nach Anspruch 2,
wobei der Kapselkörper (1) in wenigstens einem Abschnitt eine zylinderförmige Außenform aufweist,
wobei sich die Austrittsöffnung (4) in dem Abschnitt befindet,
wobei die Hülse (10) den Kapselkörper (1) in wenigstens einem Teil des Abschnitts zumindest teilweise umschließt und zumindest für ein Verdrehen von Hülse (10) und Kapselkörper (1) gegeneinander ausgestaltet ist.

4. Mischkapsel (22) nach Anspruch 2,
wobei die Hülsenöffnung (13) zu einem Applikationshilfsmittel der Hülse (10) führt, insbesondere einer Kanüle.

5. Mischkapsel (22) nach Aspekt A) von Anspruch 1,
wobei der erste Kolbenkörper (2, 2') zum Verschließen der Austrittsöffnung (4) ausgestaltet ist,
wobei die Hülse (10) in der zweiten Position von dem Kapselkörper (1) getrennt ist und
wobei die Hülse (10) dazu ausgestaltet ist, beim Trennen der Hülse (10) vom Kapselkörper (1) den ersten Kolbenkörper (2, 2') zum Freilegen der Austrittsöffnung (4) mitzunehmen.

6. Mischkapsel (22) nach Aspekt A) von Anspruch 1 oder einem der Ansprüche 2 bis 5,
wobei Kolbenkörper (2, 2') und/oder Hülse (10) ein oder mehrere Rastmittel zur Rastung von Kolbenkörper (2, 2') und Hülse (10) zueinander in der ersten, der zweiten und/oder einer dritten Position aufweisen.

7. Mischkapsel (22, 23, 24, 25) nach einem der vorstehenden Ansprüche,
wobei der erste und zweite Kolbenkörper (2, 2') einander gegenüberliegend angeordnet sind und sich der Mischraum (19) zwischen dem ersten und zweiten Kolbenkörper (2, 2') befindet.

8. Mischkapsel (25) nach einem der vorstehenden Ansprüche,
wobei der erste Kolbenkörper (2, 2') und/oder der zweite Kolbenkörper (2, 2') im Kapselkörper (1) verschiebbar sind.

9. Mischkapsel (25) nach einem der vorstehenden Ansprüche,
wobei der erste Kolbenkörper (2, 2') bis zu einer maximalen Eindringtiefe in den Kapselkörper (1) verschiebbar ist,
wobei der erste Kolbenkörper (2, 2') bei seiner maximalen Eindringtiefe an die Austrittsöffnung (4) angrenzt

10. Mischkapsel (22, 23, 24, 25) nach einem der Ansprüche 1 bis 8,
wobei die Austrittsöffnung (4) in dem ersten und/oder dem zweiten Kolbenkörper vorgesehen ist und mit einem entfernbaren Verschlussmittel verschlossen ist.

## Claims

1. A mixing capsule (22, 23, 24, 25) for producing a dental preparation, wherein the mixing capsule (22, 23, 24, 25) has:
a capsule body (1) with a mixing chamber (19) for receiving a mixing component and for mixing the dental preparation from the mixing component, a first fluid and a second fluid, and with an exit opening (4) for discharging the dental preparation,
a first cavity (20) for receiving the first fluid,
a first piston body (2, 2'), which delimits the mixing chamber (19) in the capsule body (1) and which has a first duct (21) for guiding the first fluid from the first cavity (20) into the mixing chamber (19),
a second cavity (20) for receiving the second fluid, and
a second piston body (2, 2'), which delimits the mixing chamber (19) in the capsule body (1) and which has a second duct (21) for guiding the second fluid from the second cavity (20) into the mixing chamber (19),
**characterised in that**
A) the mixing capsule (22) has a sleeve (10) which at least partially encloses the capsule body (1) and which is to be arranged relative to the capsule body (1) in at least a first and a second position, the sleeve (10) in the first position closing the exit opening (4) and the exit opening (4) in the second position being exposed so that the dental preparation can be discharged through the exit opening (4), and/or
B) the mixing capsule (22, 23, 24, 25) has a sleeve (10) which at least partially encloses the capsule body (1) and which is to be arranged relative to the capsule body (1) in at least a third and a fourth position, the sleeve (10) having a cavity for receiving an admixing component, the sleeve (10) in the third position being arranged such that the cavity is connected to the mixing chamber (19), so that admixing component can reach the mixing chamber (19), and the sleeve in the fourth position being arranged such that the cavity is closed off from the mixing chamber (19) and from surroundings of the mixing capsule (22, 23, 24, 25).

2. A mixing capsule (22) according to aspect A) of Claim 1,
wherein the sleeve (10) has a sleeve opening (13) and by reciprocal turning and/or displacement of the sleeve (10) and capsule body (1) the sleeve opening (13) and exit opening (4) can be brought into alignment with each other in the second position, so that the dental preparation can be discharged through the exit opening (4) and the sleeve opening (13), and can be separated from each other in the first position, so that the sleeve (10) closes the exit opening (4).

3. A mixing capsule (22) according to Claim 2,
wherein the capsule body (1) has a cylindrical external form in at least one portion,
wherein the exit opening (4) is located in the portion,
wherein the sleeve (10) at least partially encloses the capsule body (1) in at least part of the portion and is configured at least for turning of the sleeve (10) and capsule body (1) relative to each other.

4. A mixing capsule (22) according to Claim 2,
wherein the sleeve opening (13) leads to an application aid of the sleeve (10), in particular a cannula.

5. A mixing capsule (22) according to aspect A) of Claim 1,
wherein the first piston body (2, 2') is configured to close the exit opening (4),
wherein the sleeve (10) in the second position is separated from the capsule body (1), and
wherein the sleeve (10) is configured, upon separation of the sleeve (10) from the capsule body (1), to entrain the first piston body (2, 2') in order to expose the exit opening (4).

6. A mixing capsule (22) according to aspect A) of Claim 1 or one of Claims 2 to 5,
wherein the piston body (2, 2') and/or sleeve (10) has/have one or more latching means for latching the piston body (2, 2') and sleeve (10) together in the first, the second and/or a third position.

7. A mixing capsule (22, 23, 24, 25) according to one of the preceding claims,
wherein the first and second piston body (2, 2') are arranged opposite one another and the mixing chamber (19) is located between the first and second piston body (2, 2').

8. A mixing capsule (25) according to one of the preceding claims,
wherein the first piston body (2, 2') and/or the second piston body (2, 2') is/are displaceable in the capsule body (1).

9. A mixing capsule (25) according to one of the preceding claims,
wherein the first piston body (2, 2') is displaceable into the capsule body (1) up to a maximum depth of penetration,
wherein the first piston body (2, 2') adjoins the exit opening (4) at its maximum depth of penetration.

10. A mixing capsule (22, 23, 24, 25) according to one of Claims 1 to 8,
wherein the exit opening (4) is provided in the first and/or the second piston body and is closed with a removable locking means.

## Revendications

1. Capsule de mélange (22, 23, 24, 25) pour la fabrication d'une préparation dentaire, dans laquelle la capsule de mélange (22, 23, 24, 25) présente :
un corps de capsule (1) avec un espace de mélange (19) pour la réception d'un composant de mélange et pour le mélange de la préparation dentaire à partir du composant de mélange, d'un premier fluide et d'un second fluide et avec une ouverture de sortie (4) pour la distribution de la préparation dentaire,
une première cavité (20) pour la réception du premier fluide,
un premier corps de piston (2, 2'), qui délimite l'espace de mélange (19) dans le corps de capsule (1) et qui présente un premier canal (21) pour le guidage du premier fluide de la première cavité (20) à l'espace de mélange (19),
une seconde cavité (20) pour la réception du second fluide et
un second corps de piston (2, 2'), qui délimite l'espace de mélange (19) dans le corps de capsule (1) et qui présente un second canal (21) pour le guidage du second fluide de la seconde cavité (20) à l'espace de mélange (19),
**caractérisée en ce que**
A) la capsule de mélange (22) présente une douille (10), qui entoure au moins en partie le corps de capsule (1) et qui doit être agencée face au corps de capsule (1) dans au moins une première et une deuxième position, dans laquelle la douille (10) ferme l'ouverture de sortie (4) dans la première position et dégage l'ouverture de sortie (4) dans la deuxième position, de sorte que la préparation dentaire peut être distribuée à travers l'ouverture de sortie (4), et/ou
B) la capsule de mélange (22, 23, 24, 25) présente une douille (10), qui entoure au moins en partie le corps de capsule (1) et qui doit être agencée face au corps de capsule (1) dans au moins une troisième et une quatrième position, dans laquelle la douille (10) présente une cavité pour la réception d'un composant adjuvant, dans laquelle la douille (10) est agencée dans la troisième position de sorte que la cavité est en liaison avec l'espace de mélange (19), de sorte que du composant adjuvant peut accéder à l'espace de mélange (19) et la douille est agencée dans la quatrième position de sorte que la cavité est fermée par rapport à l'espace de mélange (19) et par rapport à un environnement de la capsule de mélange (22, 23, 24, 25).

2. Capsule de mélange (22) selon l'aspect A) de la revendication 1,
dans laquelle la douille (10) présente une ouverture de douille (13) et, par une rotation et/ou coulissement antagoniste de la douille (10) et du corps de capsule (1), l'ouverture de douille (13) et l'ouverture de sortie (4) peuvent être mises en coïncidence dans la deuxième position, de sorte que la préparation dentaire peut être distribuée à travers l'ouverture de sortie (4) et l'ouverture de douille (13), et peuvent être séparées l'une de l'autre dans la première position de sorte que la douille (10) ferme l'ouverture de sortie (4).

3. Capsule de mélange (22) selon la revendication 2,
dans laquelle le corps de capsule (1) présente une forme extérieure cylindrique dans au moins une section,
dans laquelle l'ouverture de sortie (4) se trouve dans la section,
dans laquelle la douille (10) entoure au moins en partie le corps de capsule (1) dans au moins une partie de la section et est configurée au moins pour une rotation de la douille (10) et du corps de capsule (1) l'un contre l'autre.

4. Capsule de mélange (22) selon la revendication 2, dans laquelle l'ouverture de douille (13) conduit à un auxiliaire d'application de la douille (10), en particulier d'une canule.

5. Capsule de mélange (22) selon l'aspect A) de la revendication 1,
dans laquelle le premier corps de piston (2, 2') est configuré pour fermer l'ouverture de sortie (4),
dans laquelle la douille (10) est séparée du corps de capsule (1) dans la deuxième position et
dans laquelle la douille (10) est configurée, lors de la séparation de la douille (10) du corps de capsule (1), pour entraîner le premier corps de piston (2, 2') pour le dégagement de l'ouverture de sortie (4).

6. Capsule de mélange (22) selon l'aspect A) de la revendication 1 ou selon l'une quelconque des revendications 2 à 5,
dans laquelle le corps de piston (2, 2') et/ou la douille (10) présentent un ou plusieurs moyens d'enclenchement pour l'enclenchement du corps de piston (2, 2') et de la douille (10) l'un par rapport à l'autre dans la première, la deuxième et/ou une troisième position.

7. Capsule de mélange (22, 23, 24, 25) selon l'une quelconque des revendications précédentes,
dans laquelle les premier et second corps de piston (2, 2') sont agencés l'un en face de l'autre et l'espace de mélange (19) se trouve entre le premier et le second corps de piston (2, 2').

8. Capsule de mélange (25) selon l'une quelconque des revendications précédentes,
dans laquelle le premier corps de piston (2, 2') et/ou le second corps de piston (2, 2') peuvent coulisser dans le corps de capsule (1).

9. Capsule de mélange (25) selon l'une quelconque des revendications précédentes,
dans laquelle le premier corps de piston (2, 2') peut coulisser dans le corps de capsule (1) jusqu'à une profondeur de pénétration maximale,
dans laquelle le premier corps de piston (2, 2'), à sa profondeur de pénétration maximale, est adjacent à l'ouverture de sortie (4).

10. Capsule de mélange (22, 23, 24, 25) selon l'une quelconque des revendications 1 à 8,
dans laquelle l'ouverture de sortie (4) est prévue dans le premier et/ou le second corps de piston et est fermée avec un moyen de fermeture amovible.
